# EUROPÄISCHE PATENTSCHRIFT

(11) **EP 0 536 433 B1**
(45) Veröffentlichungstag und Bekanntmachung des Hinweises auf die Patenterteilung: **03.07.1996**
(21) Anmeldenummer: 91117085.0
(22) Anmeldetag: 08.10.1991
(51) Int. Cl.: B62D 31/02, B62D 47/02

(54) **Mehrteiliges Strassenfahrzeug, insbesondere für den Personennahverkehr**
Multi-part road vehicle, particularly for urban passenger traffic
Véhicule routier composé de plusieurs unités, notamment pour le transport urbain de personnes

(43) Veröffentlichungstag der Anmeldung: 14.04.1993
(73) Patentinhaber: Urstöger, Rupert, D-91080 Uttenreuth (DE)
(72) Erfinder: Urstöger, Rupert, D-91080 Uttenreuth (DE)

(56) Entgegenhaltungen:
- EP-A- 0 127 146
- EP-A- 0 220 783
- DE-A- 3 224 590
- DE-A- 3 315 171
- ATZ AUTOMOBILTECHNISCHE ZEITSCHRIFT Bd. 92, Nr. 12, Dezember 1990, STUTTGART, DE Seiten 720 - 727; E.HOEPKE: 'Omnibustechnik 1990'
- M.A.N. FORSCHEN PLANEN BAUEN Nr. 13, 1982, AUGSBURG, DE Seiten 50 - 55; A. ÜBERFUHR: 'M.A.N.-Gelenkomnibusse und deren konstruktive Auslegung'
- "GLT, eine neue Epoche für öffentliche, städtische Beförderungssysteme" Dezember 1988, Schienen der Welt, Seiten 29 bis 36.

## Beschreibung

Die Erfindung betrifft ein mehrteiliges Straßenfahrzeug, insbesondere für den Personennahverkehr, mit den Merkmalen des Oberbegriffes von Anspruch 1.

Durch den Aufsatz "GLT, eine neue Epoche für öffentliche, städtische Beförderungssysteme" Dezember 1988, Schienen der Welt, Seiten 29 bis 36 ist ein innerstädtisches Beförderungssystem (Guided Light Transit, GLT) bekannt, dessen mehrteiliges Fahrzeug aus einem zweiachsigen sowie zwei einachsigen Wagenteilen besteht, die untereinander gelenkig verbunden sind. Das GLT-Fahrzeug weist an der zweiten und der vierten Achse elektrische Antriebe auf, die von einer Fahrleitung oder von einem mitgeführten Diesel-Generator-Satz gespeist werden können. Diese beiden Betriebsarten erlauben, wie es auch in dem Aufsatz näher beschrieben ist, einen vorteilhaften Einsatz unter den wechselnden äußeren Bedingungen, die in einem Stadtgebiet mit Citybereich und Peripherie bzw. Vororten gegeben sind. Daß alle vier-Achsen lenkbar sind, gibt dem Fahrzeug auch bei freier, nicht spurgeführter Fahrt eine verbesserte Kurvenlauffähigkeit bei geringerem Fahrbahnbreitenbedarf im Vergleich zu Fahrzeugen mit nicht lenkbaren Achsen.

Dieser vorteilhaften Kombination von Eigenschaften des GLT-Fahrzeuges stehen jedoch erhebliche nachteilige Merkmale gegenüber, sodaß das Ziel, ein der Gesamtaufgabe bestmöglich anpaßbares und komfortables Nahverkehrssystem zu schaffen, in mehreren wichtigen Punkten nicht erreicht wird.

Als besonders nachteilig ist zu werten, daß der gesamte Fußboden sehr hoch über der Fahrbahn liegt. Dadurch ist das Ein- und Aussteigen nur über besondere, hochliegende Haltesteige oder über Treppenstufen möglich. An heutige und zukünftige straßengängige Nahverkehrsfahrzeuge wie Stadtlinienbusse oder Straßen- bzw. Stadtbahnen wird die Forderung nach einer extrem niedrigen Lage des Fußbodens und nach einem stufenlosen Weg zwischen den Fahrzeugtüren und den Sitzen und Stehplatzflächen gestellt. Das GLT-Fahrzeug kann diese Forderung in keiner Weise erfüllen.

Als weiterer Nachteil des GLT-Fahrzeuges ist anzusehen, daß trotz des hochliegenden Fußbodens, der die Anordnung von Aggregate-Einbauräumen unterflur zuläßt, noch ein großer Anteil der zusätzlichen Aggregate, die für die elektrischen Antriebe und die bivalente Betriebsweise zusätzlich benötigt werden, in Behältern auf den Dächern der Wagenteile untergebracht werden müssen. Dies hat im einzelnen nachteilig zur Folge, daß die Fahrzeughöhe und damit das Lichtraumprofil wächst, daß der gesamte Aufbau für höhere mechanische Beanspruchung ausgelegt werden muß, daß der Schwerpunkt der Wagenteile besonders hoch liegt und dadurch die Fahreigenschaften beeinträchtigt werden und daß die Geräte auf dem Dach bei der Montage sowie für Inspektionen, Wartung, Reparatur und Austausch schwer zugänglich sind.

Aufgabe der vorliegenden Erfindung ist es, ein mehrteiliges Straßenfahrzeug für den Personennahverkehr zu schaffen, das die erwähnten Nachteile des GLT-Fahrzeuges nicht aufweist, das mühelos zugängliche, extrem niederflurige Fahrgasträume bietet und dabei die Unterbringung der zusätzlichen Aggregate für elektrische Antriebe und wechselnde Betriebsarten auf konstruktiv und montagetechnisch einfache Weise ermöglicht. Darüber hinaus soll mit der Erfindung eine vorteilhafte Basis geschaffen werden für ein variabel aurüstbares Nahverkehrssystem, das weitere Möglichkeiten im Hinblick auf emissionsfreies und auch leitungsloses Freifahren in besonderen Schutzbereichen wie historischen Altstädten, Fußgängerbereichen, Wohngebieten und Klinik-, Kur- und Erholungszonen erschließt.

Die Aufgabe wird erfindungsgemäß durch die im Anspruch 1 angegebenen Merkmale gelöst. Vorteilhafte Ausgestaltungen sind in den Unteransprüchen beschrieben.

Bei dem mehrteiligen Straßenfahrzeug gemäß der Erfindung führt die räumliche Aufteilung eines Wagenteils in einen Fahrgastraum und in einen auf gleicher Höhe angeordneten Aggregatebereich einerseits zwar zu einer Streckung des Fahrzeuges, die üblicherweise unerwünscht ist, weil sie zusätzliche Verkehrs- und Abstellfäche beansprucht, andererseits eröffnet aber gerade diese Bauweise, die nicht den Üblichkeiten des Fahrzeugbaus entspricht, die Möglichkeit zur Gestaltung eines äußerst vielseitigen und anpassungsfähigen Nahverkehrssystems, sodaß die Vorteile dieser Fahrzeugkonzeption um ein Vielfaches überwiegen. Durch die Schaffung von Aggregatebereichen, die in Hauptfahrtrichtung betrachtet im allgemeinen hinter den Fahrgasträumen der jeweiligen Wagenteile und bei voller Raumnutzung vertikal orientiert über den Fahrwerken angeordnet sind und bis zum Dach reichen können, werden nämlich alle erwähnten Nachteile des GLT-Fahrzeuges vermieden. Die zusätzlich benötigten Aggregate für elektrische Antriebe, also z.B. leistungselektronische Stellglieder, Netzfilter bestehend aus Drosseln und Kondensatoren, Hochleistungswiderstände zur Bremsenergie-Umsetzung, elektrische Schutz-, Sicherheits- und Meßeinrichtungen und elekronische Steur-, Regel- und Überwachungsgeräte, und für wechselnde Betriebsarten, die vor allem unterschiedliche Energiequellen und -zuführungsweisen betreffen,also z.B. Traktionsbatterien und Schaltgeräte, können konzentriert zusammen mit Fahrwerk und Motoren untergebracht werden, ohne daß auf einen durchgehenden tiefliegenden Boden des Fahrgastraumes verzichtet werden muß und ohne daß ein Teil der dafür verfügbaren Fahrzeuggrundfläche ungenutzt bleibt.
Die Räume über den Fahrwerken, die bei niederflurigen Fahrzeugen wegen der hoch über den Fußboden aufragenden Radeinbauten für die Fahrgäste ohnehin kaum nutzbar sind, können variabel mit zusätzlichen Aggregaten der elektrischen Antriebsausrüstung belegt werden. Der Schwerpunkt dieser Komponenten liegt dabei über einem Rad, d.h. über der Abstützung auf die Fahrbahn, sodaß Stützkräfte nicht mit besonderem Aufwand horizontal weitergeleitet werden müssen. Dies wirkt sich besonders bei schweren Komponenten, wie z. B. Traktionsbatterien, vorteilhaft auf die festigkeitsmäßige Auslegung aus.
Außerdem wird durch die Anordnung von elektrischen Antriebskomponenten über den Radeinbauten, also auf mehr als 1 m Höhe im Vergleich zur Unterflur-Anordnung ein deutlich erhöhter mechanischer Schutz bei Kollisionen mit anderen Fahrzeugen erreicht. Insbesondere bei hochwertigen Teilen des elektrischen Leistungskreises und bei elektrochemischen Speichern werden nicht nur unmittelbare Beschädigungen vermindert oder vermieden, sondern auch mögliche elektrische oder chemische Folgeschäden.

Durch die erfindungsgemäße Aufteilung der Wagenteile quer zu ihrer Längsachse in Fahrgasträume und Aggregatebereiche ist auch ein konstruktiv klarer und einfacher Aufbau gegeben, der sowohl eine standardisierte Ausführung der Wagenteile als auch der einzubauenden Aggregate erlaubt. Einheitlich gestaltete Einbauräume erlauben eine einheitliche Anordnung bestimmter Aggregate an einem für ihre Funktion am besten geeigneten Platz besonders dann, wenn sie in jedem Wagenteil benötigt werden. Dies trifft z. B. auf Lüftungs-, Heizungs- und Klimaanlagen zu. Sie werden hier zweckmäßigerweise auf der den Türen abgewandten Wagenseite im oberen Teil der Einbauräume angeordnet. Hier kann die relativ sauberste Frischluft vom Dach angesaugt werden und die Luftverteilung über einen Längskanal in den Fahrgastraum ohne Umwege erfolgen.
Für Aggregate, die von der Funktion her nicht ortsgebunden sind, lassen sich am Beispiel von Traktionsbatterien die Vorteile des vereinheitlichten Aufbaus von Einbauräunen zeigen. Da in einem mehrteiligen Straßenfahrzeug entsprechend der Anzahl der Räder mehrere Einbauräume angelegt werden können, besteht also die Möglichkeit, bei der Positionierung von Batterieeinheiten auf die erwünschte Massenverteilung im Gesamtfahrzeug besondere Rücksicht zu nehmen und damit die Fahr- und Bremsstabilität und die Traktion vorteilhaft zu beeinflussen. Dies ist auch dann in ausreichendem Maß zu erreichen, wenn für die Batterieeinheiten wegen ihres relativ hohen Gewichts nur die am tiefsten liegenden Teile der Einbauräume verwendet werden.

Die freie Aggregateraum-Nutzung begünstigt auch eine spätere Umrüstung oder einen nachträglichen Ausbau des Fahrzeuges für den Einsatz in einem universelleren Verkehrssystem.

Bei mehrteiligen Straßenfahrzeugen gemäß der Erfindung wird durch die Anordnung und Unterbringung der Ausrüstungskomponenten ein nachteiliger Einfluß auf die Gestaltung der Fahrgasträume vermieden und die Wagenbodenhöhe wird lediglich durch die erforderliche Bodenfreiheit oder die Haltesteighöhe bestimmt.

Diese konsequente Niederflurbauweise ermöglicht den Fahrgästen in nicht zu übertreffender Weise ein bequemes und schnelles Ein- und Aussteigen. Insbesondere behinderten und älteren Personen und Fahrgästen mit Kinderwagen und Lasten erleichtert diese Niederflurbauweise die Benutzung von öffentlichen Verkehrsmitteln.

Die heute angestrebte extem niedrige Wagenbodenhöhe von z. B. 320 mm wird auch nicht beeinflußt durch elektrische Fahrmotoren, die funktionell dem Fahrwerk zugeordnet sind, wenn sie auf der dem Fahrgastraum abgewendeten Seite der Achse angeordnet sind. Selbst wenn die Motoren wegen ihrer Länge in den dort anschließenden Gelenkbereich hineinragen, können ihre Enden bei extremem Gelenkwinkel unter Sitzausformungen an der Stirnseite des Fahgastraumes des benachbarten Wagenteils Platz finden. Dies trifft insbesondere bei außermittiger Motoranordnung zu, wenn die Fahrzeugmitte zum großen Teil durch einen Verbindungsgang zum nächsten Wagenteil eingenommen wird.
Für die Zuführung sauberer Kühlluft vom Dach zu den auf mittlerer Höhe angeordneten Aggregaten und zu den noch tiefer liegenden elektrischen Fahrmotoren ergibt sich eine vorteilhafte Möglichkeit entlang der Einbauräume,ohne daß Luftkanäle störend im Fahrgastraum geführt werden müssen, wie es bei elektrisch angetriebenen Stadtlinienbussen herkömmlicher Bauweise vorkommt.

Ein weiterer Vorteil des erfindungsgemäßen Fahrzeugkonzepts besteht darin, daß alle Fahrgasträume zwischen zwei Achsen liegen und keine verstärkt vertikal schwingenden Fahrzeugüberhänge dafür herangezogen werden müssen. Außerdem ist die Nickneigung der Wagenteile an sich schon sehr gering, weil die Hauptmasse der Aggregate nahe und über den Achsen konzentriert ist und die Abstützpunkte der Wagenteile nahe an ihren Enden liegen. Damit ist für die Fahrgäste ein deutlicher Komfortgewinn verbunden, der dieses Fahrzeug diesbezüglich nahe an gewohnte Pkw-Verhältnisse rückt.

Für Nahverkehrs-Staßenfahrzeuge, die mit dem Ziel gebaut werden, voll und extrem niederflurige Fahrgasträume aufzuweisen, stellt also die Bauweise nach Anpruch 1 eine bestmöglich ausgewogene gemeinsame Lösung unter den Aspekten Fahrzeugbauhöhe, Fahrgastraum-Optimierung, Grundflächen-Nutzung, Schwerpunktlage, Fahrverhalten, Auslegung tragender Strukturen, Kollisionsschutz hochwertiger Ausrüstung, Standardisierung von Wagenteilen und Aggregaten, Einbau dezentraler elektrischer Antriebe, Einbau schwerer Traktionsbatterien, Zugänglichkeit der Aggregate, Frischluft- und Kühlluftführung sowie Fahrkomfort dar.

Die Ausgestaltungen der Erfindung nach den Ansprüchen 2 bis 4 haben im einzelnen und in ihren Kombination besondere Vorteile.

Der verjüngte Fortsatz nach Anspruch 2 erhöht die Festigkeit und Verwindungssteifigkeit des Wagenteils durch die Querschnittsänderung, insbesondere durch einen Querwandanteil am Übergang zwischen Fahrgastraum und Aggregatebereich. Die dabei zumindest teilweise geschlossene Stirnseite des Fahrgastraumes ergibt im Vergleich zu den am Wagengelenk offenen Zellen üblicher Gelenkbus-Konstruktionen eine besondere Stabilität, sodaß die Kräfte aus Aggregategewicht, Nutzlast und Aufsattellast des nächsten Wagenteils besser aufgenommen werden können.
Wenn die Verjüngung in Richtung der Wagenbreite nach Anspruch 3 auf die Dimension eines mittigen Durchgangs zum nächsten Wagenteil erfolgt, bleiben an den Außenseiten der Wandungen des Durchgangs, oberhalb der Räder und von diesen durch strukturverstärkende, im wesentlichen waagrechte Trennwände getrennt, großvolumige Einbauräume, die eine beliebige innere Unterteilung in Anpassung an Aggregatedimensionen gestatten.
Die dort nach Anspruch 4 eingebauten Aggregate sind nicht nur wegen ihrer mittleren Höhenlage sondern auch wegen der ohne besondere Festigkeitsbedingungen gestaltbaren, äußeren Fahrzeugbegrenzung besonders gut zugänglich für Montage, Inspektion, Wartung, Reparatur und Austausch.

Weitere Vorteile und Einzelheiten der Erfindung ergeben sich aus der folgenden Beschreibung von Ausführungsbeispielen anhand der Zeichnung und in Verbindung mit den Unteransprüchen.
Es zeigt:
- FIG 1: eine schematische Seitenansicht eines einachsigen Wagenteiles des erfindungsgemäßen Straßenfahrzeuges,
- FIG 2: einen Schnitt durch das einachsige Wagenteil entlang der Linie II-II in FIG 1,
- FIG 3: den Kurvenlauf einer ersten Ausführungsform des mehrteiligen Straßenfahrzeugs gemäß der Erfindung,
- FIG 4: eine Seitenansicht einer weiteren Ausführungsform des Straßenfahrzeuges,
- FIG 5: eine Draufsicht auf das mehrteilige Straßenfahrzeug bei abgenommenem Fahrzeugdach, wobei die Fahrgast- und Aggregatebereiche schematisch dargestellt sind.

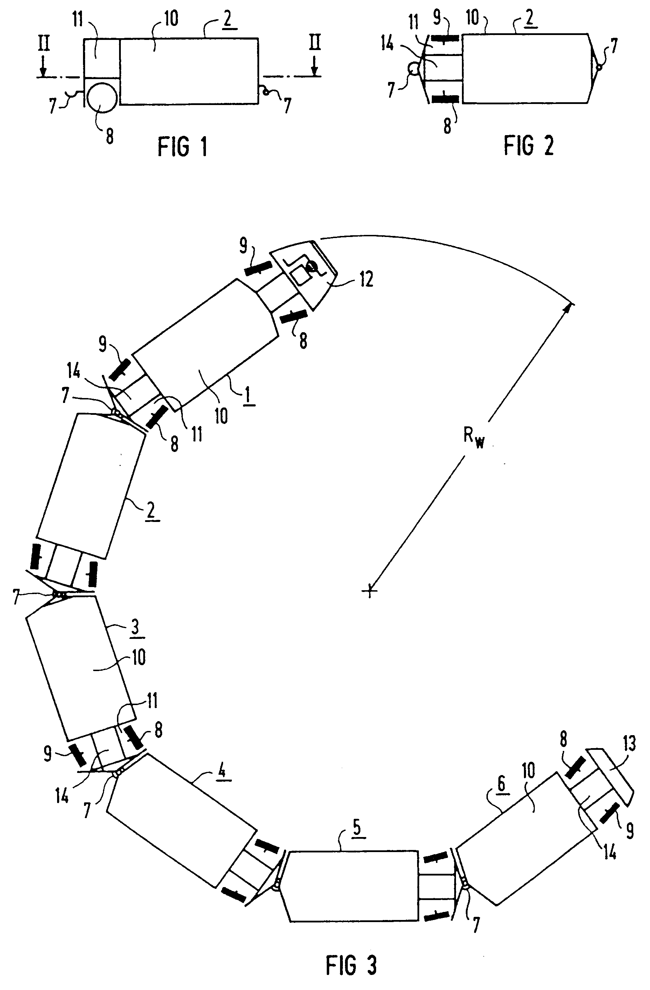

In FIG 3 sind mit 1 ein zweiachsiges Wagenteil sowie mit 2-6 einachsige aufgesattelte Wagenteile bezeichnet. Für die Wagenteile 1-6 wurde hierbei die Darstellung analog zu FIG 2 gewählt. Die Wagenteile 1-6 sind über Gelenke 7 untereinander gelenkig verbunden. In dem in FIG 3 dargestellten Ausführungsbeispiel eines sechsteiligen Straßenfahrzeuges weisen alle Achsen lenkbare Räder 8,9 auf. Der Lenkeinschlag der Räder 8,9 ist hierbei vom Gelenkwinkel zwischen zwei benachbarten Wagenteilen abhängig. Aufgrund seiner Allradlenkung kann das erfindungsgemäße Straßenfahrzeug den Wendekreis nach STVZO für Busse mit einem Radius R_{W} = 12 m befahren. Das mehrteilige Straßenfahrzeug kommt dabei mit einer wesentlich schmaleren Fahrbahn aus. Bei einer anderen konstruktiven Auslegung der Fahrzeugteile 1-6, z.B. kürzere Wagenteile oder andere Gelenke, sind auch kleinere Wendekreise erzielbar.

Bei den in FIG 3-5 dargestellten Ausführungsformen des erfindungsgemäßen Straßenfahrzeuges sind, wie in FIG 1 und 2 am Beispiel des einachsigen aufgesattelten Wagenteils 2 dargestellt, die einachsigen Wagenteile 2-5 quer zu ihren Längsachsen in einen Fahrgastraum 10 und einen technischfunktionellen Aggregatebereich 11 aufgeteilt. Der Fahrgastraum 10 weist einen tiefliegenden, insbesondere in Einstufenhöhe verlaufenden, Wagenboden auf. Im Aggregatebereich 11 können die benötigten Aggregate für Antrieb, Steuerung sowie Energiespeicherung und Bordversorgung in jeweils zweckmäßig wählbarer Kombination eingebaut werden.

Alle Wagenteile 1-6 weisen gemäß einer besonderen Ausgestaltung der Erfindung an ihren achsseitigen Enden jeweils einen verjüngten Fortsatz 14 auf, der zur Einleitung der Fahrwerkskräfte und zur Befestigung der den Achsen zugeordneten Aggregaten dient. Bei den einachsigen aufgesattelten Wagenteilen 2-5 sind im Bereich der verjüngten Fortsätze 14 die Aggregatebereiche 11 vorgesehen. Bei dem zweiachsigen Wagenteil 1 ist an dem in Fahrtrichtung gesehen ersten Fortsatz die Fahrerkabine 12 angeordnet. Bei dem zweiten Fortsatz 14 ist dann ebenso wie bei den einachsigen Wagenteilen 2-5 ein Aggregatebereich 11 vorgesehen. Das in Fahrtrichtung letzte Wagenteil 6 weist im Bereich seines verjüngten Fortsatzes 14 einen Abschlußbereich 13 auf. In dem Abschlußbereich 13 können weitere Aggregate, wie z.B. ein Dieselgeneratorsatz oder ein Schwungradspeicher untergebracht werden.

Die einzelnen Aggregatebereiche 11 sowie der Abschlußbereich 13 können sich auch über die verjüngten Fortsätze 14 hinaus erstrecken, falls dies, z.B. wegen der Vielzahl oder der Größe der aufzunehmenden Aggregate, erforderlich sein sollte. In den in FIG 1-5 dargestellten Ausführungsbeispielen sind die Aggregatebereiche 11 allerdings nur an den verjüngten Fortsätzen 14 angeordnet.

Gemäß einer weiteren vorteilhaften Ausführungsform können die verjüngten Fortsätze 14 einen Notdurchstieg 15 bzw. einen Durchgang 16 zum Transportbereich 10 des benachbarten Wagenteils aufweisen.

Bei einer besonders reparatur- und wartungsfreundlichen Ausführungsform sind die Aggregate an der Außenseite des verjüngten Fortsatzes 14 angeordnet.

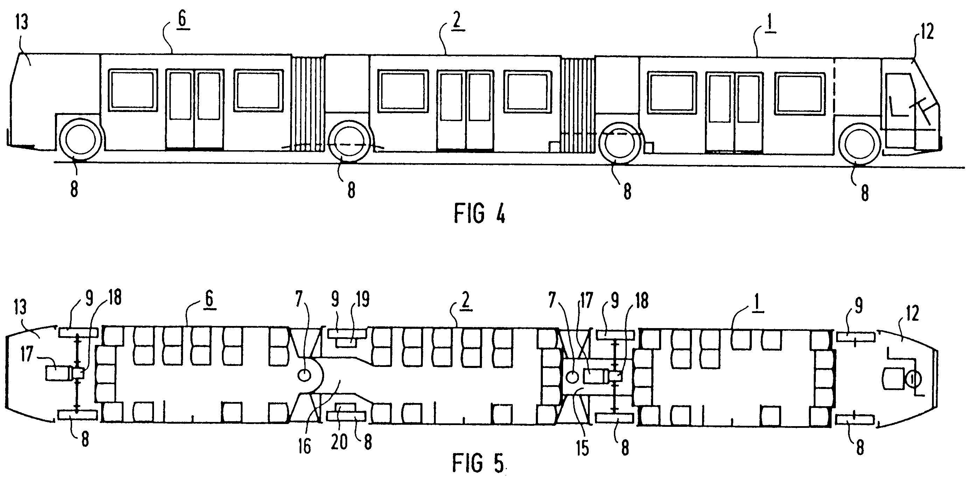

In den FIG 4 und 5 ist eine rohdimensionierte Auslegung eines dreiteiligen Straßenfahrzeuges dargestellt. Es besteht aus einem zweiachsigen Wagenteil 1 sowie zwei einachsigen aufgesattelten Wagenteilen 2 und 6. Das einachsige Wagenteil 6 weist wiederum einen Abschlußbereich 13 auf. Der Anwendungsschwerpunkt wird jedoch, wie in FIG 3 dargestellt, bei mehr als dreiteiligen Fahrzeugen liegen. Auf der Basis eines gängigen Bus-Reifens 275/70 R 22,5 mit einer maximal zulässigen Achslast von 6,9 t im Innerorts-Verkehr wird bei der Wahl von Faserverbundstoffen für die tragenden Strukturen der Wagenteile 1-6 eine Transportkapazität von ca. 40 Personen je einachsigem Wagenteil erreicht, wobei etwa die Hälfte Sitzplätze angeboten werden können. Mit tragfähigeren Reifen können auch größere Fahrzeugeinheiten gebaut werden.

In FIG 5 sind zur Gegenüberstellung der Möglichkeiten zwei der wichtigsten Gelenk- und Antriebsvarianten aufgenommen. Im Achs- und Gelenkbereich zwischen dem zweiachsigen Wagenteil 1 und dem einachsigen Wagenteil 2 sind ein Motor 17 und ein Differentialgetriebe 18 mittig angeordnet. Die Bauhöhe dieser Komponenten erlaubt nur einen Durchgang mit zwei Treppenstufen, der eher für den Räumungs- oder Notfall geeignet ist (Notdurchstieg 15). Am Übergang vom einachsigen Wagenteil 2 zum einachsigen Wagenteil 6 ist ein Einzelradantrieb 19 und 20 für die Räder 8 und 9 angedeutet. Ein derartiger Einzelradantrieb ermöglicht einen im Fahrgastbetrieb nutzbaren Durchgang 16 zwischen den Wagenteilen. Eine weitere, hier nicht dargestellte Antriebsvariante wäre eine bezüglich der Längsachse des Wagenteils asymmetrische Motoranordnung, wobei der Durchgang über einer Halbwelle auch einstufig ausführbar wäre.

Die erfindungsgemäße Aufteilung der einzelnen Wagenteile 1-6 in einen Fahrgastraum 10 und einen technisch-funktionellen Aggregatebereich 11 führt zwar zu einer Streckung der einzelnen Wagenteile, die üblicherweise unerwünscht ist, weil sie zusätzliche Verkehrs- und Abstellfläche beansprucht. Andererseits eröffnet diese Bauweise eine Möglichkeit zur Gestaltung eines äußerst vielseitigen und anpassungsfähigen Nahverkehrssystems, so daß die Vorteile dieser Fahrzeugkonzeption um ein Vielfaches überwiegen. Die Vielseitigkeit und Anpassungsfähigkeit des erfindungsgemäßen Straßenfahrzeugs bezieht sich insbesondere auf die Fahrwegnutzung, die Lenkung sowie Spurführung und die Stromversorgung für die elektrischen Antriebe.

Ein Hauptziel bei der Konzeption des erfindungsgemäßen Straßenfahrzeuges für den innerstädtischen Personentransport war es im besonderen, ein komfortables niederfluriges Fahrzeug mit umweltverträglichen emissionsfreien Elektroantrieben zu schaffen und für dessen Komponenten und Energiespeicher eine systematische Raumzuordnung zu finden. Auf der beschriebenen Grundlage ist ein äußerst vielseitiges Nahverkehrssystem aufbaubar, das, ähnlich wie mit Dieselbussen, eine Betriebsaufnahme auf normalen unpräparierten Straßen ohne besondere stationäre Einrichtungen ermöglicht. Dazu gehören auch bevorzugte und exklusive Fahrspuren von Bussen. Trassen in Hochlage oder Tunnelstrecken werden, falls erforderlich, mit Zusatzeinrichtungen zur Spurführung nutzbar. Eine weitere Möglichkeit liegt im Befahren von Straßen- und Stadtbahntrassen, wenn Fahrstreifen für Einfachreifen außerhalb der Schienen angelegt sind.

Entsprechend der Grundforderung zur Nutzung vorhandener Fahrwege bildet die manuelle Lenkung durch einen Fahrer die Basis des erfindinngsgemäßen Straßenfahrzeugs. Zusätzlich zur manuellen Lenkung kann eine elektronische und/oder eine mechanische Spurführung an einem seitlichen Bord, die für Busse entwickelt wurde, vorgesehen sein. Für die Mitbenutzung von Bahntrassen ist eine vorlaufende Führungsachse auf dem Gleis denkbar. Die Achsen der nachlaufenden Wagenteile 2-6 halten die Spur des zweiachsigen Wagenteils 1 mit Hilfe einer gelenkwinkelabhängigen Beeinflussung mit geringen Toleranzen ein.

Die für das freie Fahren erforderliche Energie, z.B. in modernen Hochleistungs-Batterien oder in einem Kraftstofftank, ist aufgrund der erfindungsgemäßen Aufteilung der einzelnen Wagenteile in einen Fahrgastraum 10 und einen Aggregatebereich 11 problemlos möglich. Ein für spezielle Anwendungsfälle vorgesehener Dieselgeneratorsatz für Bestpunktbetrieb kann im Überhang des letzten Wagenteils 6, der als Abschlußteil 13 ausgebildet ist, untergebracht werden. Darüber hinaus kann das erfindungsgemäße Straßenfahrzeug in vorteilhafter Weise über eine Trolleybus- oder über eine Stadtbahn-Fahrleitung mit Strom versorgt werden. Letzteres unter Nutzung der erwähnten Führungsachse zur Stromrückleitung.

Das mehrteilige Straßenfahrzeug gemäß der Erfindung ermöglicht die verschiedensten Kombinationen der erwähnten Fahrweg-, Spurführungs- und Stromversorgungs-Varianten entsprechend den jeweiligen örtlichen Gegebenheiten und unter Anpassung an verfügbare Mittel. Voraussetzung hierfür ist lediglich, daß bei der konstruktiven Ausgestaltung des erfindungsgemäßen Konzepts die benötigten Einbauplätze in den Aggregatebereichen 11 für die Unterbringung der erforderlichen Komponenten systematisch freigehalten wird. Damit ist auch ein Nachrüsten zum späteren Ausbau des Systems problemlos möglich.

Aus der Vielzahl der Kombinationen werden sich einige als besonders attraktiv erweisen, wobei die Akzente auch gegensätzlich sein können, je nach Vereinbarkeit mit den jeweiligen vorgegebenen Randbedingungen. So sind z.B. bei der Energieversorgung der Antriebsaggregate außer der Wahl einer einzigen Versorgungsart auch noch folgende Kombinationen denkbar: Batterie- und Dieselaggregat; Batterie und Oberleitung; Oberleitung und Dieselaggregat; Batterie, Oberleitung und Dieselaggregat. Das Dieselaggregat ist hierbei als Dieselgeneratorsatz ausgebildet,, der die dezentral angeordneten Elektromotoren (Einzelradantriebe 19,20) mit Strom versorgt. Dafür sind lediglich flexible Stromleitungen erforderlich, deren Durchführung im Bereich der Gelenke 7 konstruktiv einfach ist. Derartige von einem Dieselgeneratorsatz gespeiste elektromotorische Einzelradantriebe 19,20 sind deshalb besonders vorteilhaft bei einem mehrteiligen Straßenfahrzeug mit Allradantrieb einsetzbar.

Zu den hier aufgezählten Möglichkeiten der Stromversorgung lassen sich alle nicht ausschließenden Fahrbahn- und Spurführungsarten kombinieren, wobei die Übergänge zwischen Stromversorgungsbereichen und Fahrbahn- bzw. Spurführungsarten nicht aneinander gebunden sind.

Das erfindungsgemäße Straßenfahrzeug kann in besonders vorteilhafter Weise auch mit Betriebsleit- und Automatisierungseinrichtungen ausgestattet werden. Diese Einrichtungen sind ebenfalls in den Aggregatebereichen 11 der einzelnen Wagenteile 1-6 einbaubar.

## Patentansprüche

1. Mehrteiliges Straßenfahrzeug, insbesondere für den Personennahverkehr, mit wenigstens einem zweiachsigen Wagenteil (1) und wenigstens einem einachsigen aufgesattelten Wagenteil (2-6), wobei die Wagenteile (1-6) untereinander gelenkig verbunden sind und zumindest zwei der Achsen elektrisch angetrieben und die Räder (8,9) wenigstens einer Achse lenkbar sind,
dadurch gekennzeichnet, daß wenigstens ein Wagenteil (1-6) quer zu seiner Längsachse geteilt ist in einen niederflurigen, vorzugsweise stufenlosen Fahrgastraum (10) und in einen technisch-funktionellen Aggregatebereich (11), in welchem auf wenigstens einer Wagenseite oberhalb des Rades (8) und zugehöriger Fahrwerkselemente Einbauraum vorhanden ist, der zur Aufnahme von Aggregaten dient, die für Lüftung, Heizung, Klimatisierung, elektrische Antriebssteuerung, Bordstromversorgung, Energiespeicherung sowie weitere Fahrzeugfunktionen benötigt werden.

2. Mehrteiliges Straßenfahrzeug nach Anspruch 1, wobei die tragende Struktur eines Aggregatebereichs als verjüngter Fortsatz (14) des Fahrgastraumes (10) ausgebildet ist.

3. Mehrteiliges Staßenfahrzeug nach Anspruch 2, wobei der verjüngte Fortsatz (14) eines Wagenteils (1-5) einen Durchgang (16) oder Notdurchstieg (15) zum Fahrgastraum des benachbarten Wagenteils aufweist.

4. Mehrteiliges Straßenfahrzeug nach Aspruch 2 oder 3, wobei an den Außenseiten der verjüngten Fortsätze (14) oberhalb der Räder die Aggregate schmutz- und feuchtigkeitgeschützt angeordnet sind.

5. Mehrteiliges Staßenfahrzeug nach einem oder mehreren der Ansprüche 1 bis 4, wobei die tragenden Strukturen der Wagenteile (1-6), jedoch zumindest der Aggregatebereiche (11) in Faserverbund-Bauweise ausgebildet sind.

6. Mehrteiliges Straßenfahrzeug nach einem oder mehreren der Ansprüche 1 bis 5, wobei der Aggregatebereich des in Fahrtrichtung letzten Wagenteils (6) als Abschlußbereich (13) ausgebildet ist, in dem weitere Aggregate wie ein Diesel-Generator-Satz, ein Schwungradspeicher und/oder eine weitere Fahrerkabine angeordnet ist.

7. Mehrteiliges Straßenfahrzeug nach einem oder mehreren der Ansprüche 1 bis 6, wobei alle Achsen lenkbare Räder (8,9) aufweisen und der Lenkeinschlag der Räder der mittleren Achsen vom Winkel des nächstliegenden Wagengelenks (7) abhängig ist.

8. Mehrteiliges Straßenfahrzeug nach einem oder mehreren der Ansprüche 1 bis 7, wobei die nachlaufende Achse des zweiachsigen Wagenteils (1) und die Achsen aller einachsigen Wagenteile (2-6) mit achsweisen Antrieben durch einen Motor (17) über ein Ausgleichsgetriebe (18) und Halbwellen oder mit Einzelradantrieben ausgerüstet sind.

## Claims

1. Multi-part road vehicle, particularly for urban passenger traffic, with at least one two-axle car (1) and at least one single-axle semitrailer car (2-6), the cars (1-6) being connected to one another in a jointed manner and at least two of the axles being electrically driven and the wheels (8, 9) of at least one axle being steerable, characterized in that at least one car (1-6) is divided transversely to its longitudinal axis into a low-floor, preferably step-free passenger compartment (10) and into a technical/functional unit-accommodating area (11) in which, above the wheel (8) and associated running-gear elements, on at least one side of the car, there is installation space which is used to accommodate units required for ventilation, heating, air-conditioning, electric drive control, on-board power supply, energy storage and other vehicle functions.

2. Multi-part road vehicle according to Claim 1, the load-bearing structure of a unit-accommodating area being designed as a narrowed extension (14) of the passenger compartment (10).

3. Multi-part road vehicle according to Claim 2, the narrowed extension (14) of a car (1-5) having a passage (16) or emergency crossover (15) leading to the passenger compartment of the adjacent car.

4. Multi-part road vehicle according to Claim 2 or 3, the units being arranged above the wheels, on the outer sides of the narrowed extensions (14), in a manner protected from dirt and moisture.

5. Multi-part road vehicle according to one or more of Claims 1 to 4, the load-bearing structures of the cars (1-6), or at least the unit-accommodating areas (11), being of fibre composite construction.

6. Multi-part road vehicle according to one or more of Claims 1 to 5, the unit-accommodating area of the last car (6) in the direction of travel being designed as a tail region (13) in which further units such as a diesel generator set, a flywheel energy store and/or another driver's cab is arranged.

7. Multi-part road vehicle according to one or more of Claims 1 to 6, all the axles having steerable wheels (8, 9) and the steering angle of the wheels of the central axles being dependent on the angle of the nearest intercar joint (7).

8. Multi-part road vehicle according to one or more of Claims 1 to 7, the trailing axle of the two-axle car (1) and the axles of all the single-axle cars (2-6) being fitted with individual axle drives, being driven by a motor (17) via a differential (18) and half-shafts, or being fitted with individual-wheel drives.

## Revendications

1. Véhicule routier composé de plusieurs unités, notamment pour le transport urbain de personnes, comprenant au moins une unité de voiture (1) à deux essieux et au moins une unité de voiture (2 à 6) à un essieu attelée, les unités de voiture (1 à 6) étant articulées les unes aux autres et au moins deux des essieux étant entraînés électriquement et les roues (8,9) d'au moins un essieu pouvant être orientées,
caractérisé en ce qu'au moins une unité de voiture (1 à 6) est séparée transversalement à son axe longitudinal en un compartiment (10) pour voyageurs à plancher bas, de préférence sans marche et en une zone (11) de groupes à fonction technique, dans laquelle existe d'au moins un côté de la voiture au dessus de la roue (8) et des éléments associés de châssis, une chambre de montage, qui sert à la réception de groupes nécessaires à la ventilation, au chauffage, au conditionnement d'air, à la commande électrique d'entraînement, à l'alimentation en courant du tableau de bord, au stockage d'énergie, ainsi qu'à d'autres fonctions du véhicule.

2. Véhicule routier composé de plusieurs unités suivant la revendication 1, dans lequel la structure porteuse d'une zone pour les groupes est sous la forme d'un prolongement (14) rétréci du compartiment (10) pour voyageurs.

3. Véhicule routier composé de plusieurs unités suivant la revendication 2, dans lequel le prolongement (14) rétréci d'une unité (1 à 5) de voiture comporte un passage (16) ou issue (15) de secours vers le compartiment pour voyageurs de l'unité de voiture voisine.

4. Véhicule routier composé de plusieurs unités suivant la revendication 2 ou 3, dans lequel les groupes sont disposés sur les côtés extérieurs des prolongements (14) rétrécis au dessus des roues en étant protégés des salissures et de l'humidité.

5. Véhicule routier composé de plusieurs unités suivant l'une ou plusieurs des revendications 1 à 4, dans lequel les structures porteuses des unités (1 à 6) de voiture, mais au moins les zones (11) pour les groupes sont d'un mode de construction à composite de fibre.

6. Véhicule routier composé de plusieurs unités suivant l'une ou plusieurs des revendications 1 à 5, dans lequel la zone pour les groupes de la dernière unité (6) de voiture dans le sens du déplacement est sous la forme d'une zone (13) de terminaison, dans laquelle d'autres groupes comme un groupe diesel-électrogène, un accumulateur à volant ét/ou une autre cabine de conducteur sont disposés.

7. Véhicule routier composé de plusieurs unités suivant l'une ou plusieurs des revendications 1 à 6, dans lequel tous les essieux comportent des roues (8,9) pouvant être orientées et l'angle de braquage des roues des essieux médians est dépendant de l'angle de l'articulation (7) de voiture suivante.

8. Véhicule routier composé de plusieurs unités suivant l'une ou plusieurs des revendications 1 à 7, dans lequel l'essieu traîné de l'unité (1) de voiture à deux essieux et les essieux de toutes les unités (2 à 6) de voiture à un essieu sont équipés d'entraînements d'essieux par un moteur (17) par l'intermédiaire d'un engrenage différentiel (18) et d'arbres d'essieu ou de roues motrices indépendantes.
